# EUROPEAN PATENT APPLICATION

(11) **EP 4 575 993 A1**
(43) Date of publication of application: **25.06.2025**
(21) Application number: 23217925.9
(22) Date of filing: 19.12.2023
(51) Int. Cl.: G06T 7/33

(54) **ANATOMY REFERENCE SYSTEM**

(71) Applicant: Koninklijke Philips N.V., 5656 AG Eindhoven (NL)
(72) Inventor: SAUBER, Natascha Kathrin, Eindhoven (NL); WAECHTER-STEHLE, Irina, Eindhoven (NL); WEBER, Frank Michae, 5656AG Eindhoven (NL); WILD, Sebastian, Eindhoven (NL); NIJHOF, Niels, Eindhoven (NL); VAN GEFFEN, Michel, Eindhoven (NL)
(74) Representative: Philips Intellectual Property & Standards

(57) **Abstract**

Proposed concepts thus aim to provide schemes, solutions, concepts, designs, methods and systems pertaining to determining an anatomy-anchored reference system for a medical dataset comprising a representation of at least part of an anatomical structure. In particular, embodiments aim to provide a method for determining an anatomy-anchored reference system for a medical dataset comprising a representation of at least part of an anatomical structure by identifying a plurality of predetermined features of interest of the anatomical structure in the medical dataset. In other words, it is proposed that by identifying features of interest, e.g., anatomical features, of an anatomical structure in a medical dataset, such as a heart, an anatomy-anchored reference system can thus be determined. In this way, a single common reference system can be generated that provides a more efficient and/or effective method of facilitating registration between different images/models/segmentations/views.

## Description

### FIELD OF THE INVENTION

This invention relates to the field of anatomy reference systems, and more particularly, to the field of anatomy-anchored reference systems.

### BACKGROUND OF THE INVENTION

Comparing the heart anatomy of two different ultrasound clips to each other is difficult since typically the acquisition direction (transducer position) in relation to the anatomy is not usually known. This comparison, however, is necessary in many scenarios, e.g., in preprocedural reassessment, longitudinal patient observations, and transferring operation planning information into live guidance.

There already exist different methods of aligning images with different acquisition directions, such as image-based registration and multivariate registration, however, these are not sufficient in many applications for various reasons. For example, different applications require different precisions on different parts of the images, e.g., in the case of valve replacement of the tricuspid valve, the position of the apex is not relevant. Also, heart anatomy changes over the heart cycle, which these traditional methods typically do not account for. Furthermore, different parts of the heart might be contained in the transducer acquisition sector and, even so, image-based registrations might not be fast enough for live applications. In some cases, image information might not even be available but only derived information such as segmentations.

There are some methods which register two heart model meshes from model-based segmentations to each other in order to create the alignment. The heart model meshes contain anatomical information so it is possible to map them to each other. Since the meshes do not all have the same topology, however, and the anatomical information sometimes differs in the exact meaning, it is necessary to create pairwise mappings (an exponential number) which results in substantial maintenance/computational effort. Also, pairwise mappings need to be created in case third party segmentations need to be mapped. This is not efficient and/or effective enough for many purposes.

### SUMMARY OF THE INVENTION

The invention is defined by the claims.

According to examples in accordance with an aspect of the invention, there is provided a computer-implemented method for determining an anatomy-anchored reference system for a medical dataset comprising a representation of at least part of an anatomical structure.

The method comprises: identifying a plurality of predetermined features of interest of the anatomical structure in the medical dataset; and determining an anatomy-anchored reference system for the medical dataset based on the identified plurality of predetermined features of interest.

Proposed concepts thus aim to provide schemes, solutions, concepts, designs, methods and systems pertaining to determining an anatomy-anchored reference system for a medical dataset comprising a representation of at least part of an anatomical structure. In particular, embodiments aim to provide a method for determining an anatomy-anchored reference system for a medical dataset comprising a representation of at least part of an anatomical structure by identifying a plurality of predetermined features of interest of the anatomical structure in the medical dataset.

In other words, it is proposed that by identifying features of interest, e.g., anatomical features, of an anatomical structure in a medical dataset, such as a heart, an anatomy-anchored reference system can thus be determined. In this way, a single common reference system can be generated that provides a more efficient and/or effective method of facilitating registration between different images/models/segmentations/views. For example, rather than pairwise mappings, which map each image/model to each other image/model, a single anatomy-anchored reference system can instead be determined which any image/model can independently reference. This thus provides a more effective and/or efficient facilitation of registration between a wide array and variety of elements while promoting long term compatibility.

For example, by determining a single anatomy-anchored reference system (based on identified features of interest of an anatomical structure), only one mapping to the reference system needs to be defined per element, e.g., an image, a model, a segmentation, etc.

For example, this can thus be used to facilitate registration between different scenarios, e.g., to use information from planning (which is done in TTE) to facilitate preprocedural reassessment (which is done in TEE). Furthermore, this reference system can be stored and used in future when new images and/or segmentations, for example, become available. An anatomy-anchored reference system is thus provided which can be efficiently and/or effectively generated from a single representation of the anatomical structure and then used for a wide variety of purposes.

The anatomy-anchored reference system may also be easily adjusted/modified after and/or during creation, for example, to include temporal references (e.g., in relation to the heart cycle if the anatomical structure is a heart) and/or to include confidence scores for different parts of the reference system, since in medical datasets (e.g., an ultrasound dataset) not all parts of an anatomical structure are necessarily contained in the image data, and thus those not imaged may have lower confidence scores.

Ultimately, an improved method for determining an anatomy-anchored reference system for a medical dataset comprising a representation of at least part of an anatomical structure is provided.

In some embodiments, the method may further comprise adjusting the medical dataset based on the anatomy-anchored reference system. For instance, the medical dataset may be modified to take into account data contained within the anatomy-anchored reference system, e.g., benefitting from insights provided by the anatomy-anchored reference system. This may provide an efficient way of utilising the both the anatomy-anchored reference system and the medical dataset in that useful data can be stored directly in the medical dataset.

In some embodiments, adjusting the medical dataset may comprise storing the anatomy-anchored reference system in the medical dataset. This may provide an efficient method of storage for the anatomy-anchored reference system as well as ensuring that the anatomy-anchored reference system will be available and immediately to hand in future when studying/analysing the medical dataset.

In some embodiments, the medical dataset may comprise at least one medical image of at least part of the anatomical structure. A medical image provides a widely available, efficient, and/or effective form of representation of at least part of an anatomical structure.

In some embodiments, identifying the plurality of predetermined features of interest of the anatomical structure may be based on a predetermined anatomical model. This may provide a more effective and/or efficient way of identifying predetermined features of interest, e.g., anatomical features, such that medical knowledge not directly contained within the medical dataset can be utilised in order to help identify features.

In some embodiments, the plurality of features may comprise at least one of: a landmark; a polygon; a mesh; a point cloud; and/or a parametric model. These may all provide efficient and/or effective forms of features which can be identified and utilised in order to determine an anatomy-anchored reference system.

In some embodiments, identifying the plurality of predetermined features of interest of the anatomical structure may comprise determining a confidence score for each of the plurality of predetermined features of interest. This may facilitate the generation/determination of a more complex anatomy-anchored reference system which is capable of distinguishing between positions of features of interest which are more reliable (i.e., which the system is more confident on) and positions of features of interest which may be less reliable, e.g., may have a higher room for error. This may also facilitate the optimization of future alignment in a specific region of interest by taking into account the confidence values of the different features of interest, and thus determining an anatomy-anchored reference system which, for example, is preferentially based on features of interest with high confidence scores in the region of interest over features of interest with low confidence scores in that region of interest and/or features of interest with high confidence scores but in other regions.

Determining a confidence score for each of the plurality of predetermined features of interest may be based on whether a feature of interest has been adjusted/approved by a user (e.g., a physician). For example, confidence scores in user-adjusted/approved features of interest can be higher.

In some embodiments, the anatomical structure may comprise a cyclically-moving anatomical structure. This may facilitate the use of the proposed method with cyclically-moving anatomical structures which may particularly benefit from having an anatomy-anchored reference system determined for them.

In some embodiments, the cyclically-moving anatomical structure may comprise a heart. This may facilitate the use of the proposed method with hearts, the mappings and registrations of which are of significant medical importance.

In some embodiments, the method may further comprise: segmenting the anatomical structure in the medical dataset to generate a segmentation mesh; and wherein identifying the plurality of predetermined features of interest of the anatomical structure is based on the segmentation mesh. This may provide a particularly efficient and/or effective method of identifying predetermined features of interest in an anatomical structure.

In some embodiments, the method may further comprise: identifying a second plurality of predetermined features of interest of the anatomical structure in a second medical dataset comprising a representation of at least a portion of the anatomical structure; and aligning the first and second medical datasets based on the anatomy-anchored reference system and the second plurality of predetermined features of interest. This may thus facilitate the efficient and/or effective aligning/registration of two different representations of the same anatomical structure based on the anatomy-anchored reference system.

In some embodiments, the medical dataset may comprise at least two representations of at least part of the anatomical structure separated in time, and the method may further comprise: identifying a plurality of predetermined temporal features of interest of the anatomical structure in the medical dataset; and wherein determining the anatomy-anchored reference system may be based on the predetermined temporal features of interest of the anatomical structure in the medical dataset. This may allow for changes in the anatomical structure over time to be accounted for within the anatomy-anchored reference system.

In some embodiments, identifying the plurality of predetermined features of interest of the anatomical structure may be based on the predetermined temporal features of interest. This may thus allow for more efficient and/or effective identification of the plurality of predetermined features of interest, for example, the anatomical structure may be expected to look different at a certain point in time compared to at another point in time.

In some embodiments, determining the anatomy-based reference system may comprise determining a plurality of anatomy-based reference systems, and each of the plurality of anatomy-based reference systems may be associated with a different predetermined temporal feature of interest. For example, this may allow each temporal feature of interest (for example, the atrial contraction and atrial relaxation) to each have a corresponding anatomy-based reference system such that the reference systems can be more effective for anatomical structures during those same temporal features of interest.

In some embodiments, the anatomy-anchored reference system may comprise an anatomy-anchored coordinate system. A coordinate system has been found to be an effective and/or efficient form of reference system.

In some embodiments, the medical dataset may comprise an ultrasound dataset. Ultrasound is commonly used to study/analyse/image anatomical structures.

In some embodiments, the method may further comprise identifying a second plurality of predetermined features of interest of the anatomical structure in a second medical dataset comprising a representation of at least a portion of the anatomical structure; determining a second anatomy-anchored reference system for the second medical dataset based on the identified second plurality of predetermined features of interest; and aligning the first and second medical datasets based on the first and second anatomy-anchored reference systems. This may provide a more robust and comprehensive method of aligning the first and second medical datasets.

According to another aspect of the invention, there is provided a computer program comprising code means for implementing the method of any herein disclosed method when said program is run on a processing system.

According to another aspect of the invention, there is provided a system for determining an anatomy-anchored reference system for a medical dataset comprising a representation of at least part of an anatomical structure. The system comprising a processor configured to: identify a plurality of predetermined features of interest of the anatomical structure in the medical dataset; and determine an anatomy-anchored reference system for the medical dataset based on the identified plurality of predetermined features of interest.

Thus, there may be proposed concepts for determining an anatomy-anchored reference system for a medical dataset comprising a representation of at least part of an anatomical structure, and this may be done based on identifying a plurality of predetermined features of interest of the anatomical structure in the medical dataset.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a simplified flow diagram of a method for determining an anatomy-anchored reference system for a medical dataset comprising a representation of at least part of an anatomical structure according to a proposed embodiment;
Fig. 2 is a flow diagram of a method for determining an anatomy-anchored reference system for a medical dataset comprising a representation of at least part of an anatomical structure according to a proposed embodiment;
Fig. 3 is a flow diagram of a method for determining an anatomy-anchored reference system for a medical dataset comprising a representation of at least part of an anatomical structure according to a proposed embodiment;
Fig. 4 is a flow diagram of a method for determining an anatomy-anchored reference system for a medical dataset comprising a representation of at least part of an anatomical structure according to a proposed embodiment;
Fig. 5 is a simplified block diagram of a system for determining an anatomy-anchored reference system for a medical dataset comprising a representation of at least part of an anatomical structure according to a proposed embodiment; and
Fig. 6 illustrates an example of a computer within which one or more parts of an embodiment may be employed.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Implementations in accordance with the present disclosure relate to various techniques, methods, schemes and/or solutions pertaining to determining an anatomy-anchored reference system for a medical dataset comprising a representation of at least part of an anatomical structure. According to proposed concepts, a number of possible solutions may be implemented separately or jointly. That is, although these possible solutions may be described below separately, two or more of these possible solutions may be implemented in one combination or another.

Embodiments of the invention aim to provide a method for determining an anatomy-anchored reference system for a medical dataset comprising a representation of at least part of an anatomical structure. This can be achieved by identifying a plurality of predetermined features of interest of the anatomical structure in the medical dataset.

Proposed concepts thus aim to provide schemes, solutions, concepts, designs, methods and systems pertaining to determining an anatomy-anchored reference system for a medical dataset comprising a representation of at least part of an anatomical structure. In particular, embodiments aim to provide a method for determining an anatomy-anchored reference system for a medical dataset comprising a representation of at least part of an anatomical structure by identifying a plurality of predetermined features of interest of the anatomical structure in the medical dataset.

In other words, it is proposed that by identifying features of interest, e.g., anatomical features, of an anatomical structure in a medical dataset, such as a heart, an anatomy-anchored reference system can thus be determined. In this way, a single common reference system can be generated that provides a more efficient and/or effective method of facilitating registration between different images/models/segmentations/views. For example, rather than pairwise mappings, which map each image/model to each other image/model, a single anatomy-anchored reference system can instead be determined which any image/model can independently reference. This thus provides a more effective and/or efficient facilitation of registration between a wide array and variety of elements.

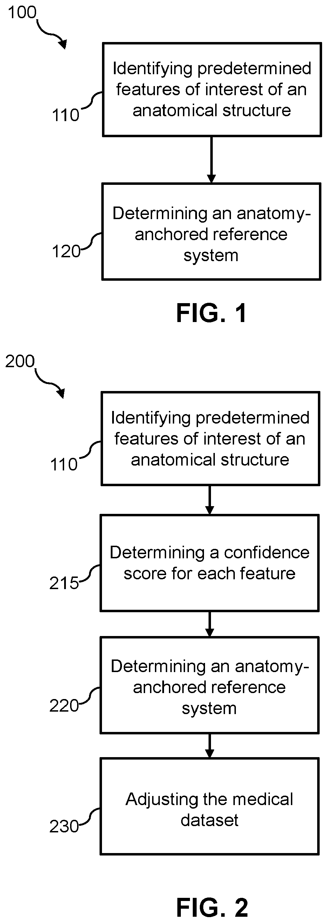

Referring now to Fig. 1, there is depicted a simplified flow diagram of a method 100 for determining an anatomy-anchored reference system for a medical dataset comprising a representation of at least part of an anatomical structure according to a proposed embodiment.

A medical dataset comprising a representation of at least part of an anatomical structure can be understood as a medical dataset comprising a representation which can be of the whole of an anatomical structure or only a part of it, i.e., not the whole of it, i.e., only/at least a partial representation of the anatomical structure. In a simple example, where the anatomical structure is a subject's brain, the medical dataset can comprise a representation of the whole of the brain or, for example, only the left hemisphere or the right hemisphere, etc.

The method 100 begins with the step 110 of identifying a plurality of predetermined features of interest of the anatomical structure in the medical dataset. For example, these predetermined features of interest can be understood as predetermined anatomical features. For example, if the anatomical structure were a heart, some example predetermined features of interest could comprise the tricuspid valve annulus and/or centre, the mitral valve annulus and/or centre, the atrial valve annulus and/or centre, and/or the right/left ventricle apex, etc.

For example, in some embodiments, the centre and apex features can beneficially take the forms of landmarks, and the annulus features can beneficially take the forms of polygons. A combination of landmarks and polygons and their spatial relation to one another can then form the anatomy-anchored reference system. Other simpler or more complex reference systems are possible, however, such as, for example, a 3D parametric model of a heart (or any other anatomical structures) or a set of 3D meshes like in a heart model from a model-based segmentation.

Further, in this embodiment, identifying the plurality of predetermined features of interest of the anatomical structure is based on a predetermined anatomical model. This provides a more effective and/or efficient way of identifying predetermined features of interest, e.g., anatomical features, such that medical knowledge not directly contained within the medical dataset can be utilised in order to help identify features. For instance, this can help improve extrapolation for structures that were inside the acquiring FOV for previous images (e.g., the at least part of the anatomical structure that is represented) (e.g., TTE or CT) but are now outside the FOV in a different image (e.g., intro procedural TEE). Taking into account a predetermined anatomical model is not essential, however, as the skilled person would understand.

In other words, the use of a predetermined anatomical model can aid in the defining of predetermined features of interest outside the data cone of any given image/representation of the anatomical structure. A predetermined anatomical model can essentially be fitted to the data in the representation and also give estimates for parts of the anatomical structure which are outside of the image/representation cone. Essentially, information from the medical dataset can be extrapolated based on the predetermined anatomical model, however, this is not essential to the working of the invention.

For example, in some embodiments, the features of interest can be identified by manual identification, for example, with a software tool; manual segmentation, for example, with a software tool; and/or a segmentation method which does not necessarily need to take the form of a segmentation mesh, for example, it could also be a parametric model or a set of landmarks and/or polygons.

In this embodiment, the plurality of features comprises at least one of: a landmark; a polygon; a mesh; a point cloud; and/or a parametric model. These all provide efficient and/or effective forms of features which can be identified and utilised in order to determine an anatomy-anchored reference system. In other embodiments, however, the plurality of features can comprise any suitable element, as the skilled person would understand.

In this embodiment, the medical dataset comprises at least one medical image of at least part of the anatomical structure. A medical image provides a widely available, efficient, and/or effective form of representation of at least part of an anatomical structure. This is not essential, however, and in other embodiments, the medical dataset can comprise any other suitable form of representation of the anatomical structure, as the skilled person would understand.

Step 120 comprises determining an anatomy-anchored reference system for the medical dataset based on the identified plurality of predetermined features of interest. An anatomy-anchored reference system can be understood as an anatomy-based reference system and essentially describes a reference system which uses features of anatomy (i.e., features of an anatomical structure) to position and orient its reference/coordinate system. In other words, an anatomy-anchored reference system can be understood as a framework for spatial orientation in which positions and directions are described based on, or in reference to, anatomical structures and landmarks. In yet other words, an anatomy-anchored reference system can be understood as providing a precise, unified nomenclature of landmarks and view planes, or in other words, a spatial reference system.

In its simplest form, the anatomy-anchored reference system can simply comprise the set of identified plurality of predetermined features of interest and potentially their spatial relations to one another. In this embodiment, however, the anatomy-anchored reference system comprises an anatomy-anchored coordinate system. A coordinate system has been found to be an effective and/or efficient form of reference system. For example, the coordinate system can comprise a set of cartesian (X,Y,Z) coordinates with its origin at a particular feature of interest, and with the x-axis pointing towards another particular feature of interest, and the y-axis pointing towards another particular feature of interest. Therefore, in various embodiments, the coordinate system can take the form of any of the following: a cartesian coordinate system; a polar coordinate system; a spherical coordinate system; a cylindrical coordinate system; a cylindrical polar coordinate system; a cylindrical equatorial coordinate system; and/or a homogenous coordinate system.

Other examples of reference systems which can potentially be used comprise: a landmark-based reference system; a relative positional reference system; a network-based reference system; a semantic reference system; a time-dependent reference system; a coordinate-free reference system; a biological reference system; an event-driven reference system; a user-centric reference system; a multimodal reference system; and/or a hierarchical reference system.

Considering absolute vs relative positions of predetermined features of interest, typically view planes are defined in absolute distances to certain landmarks, which an anatomy-anchored reference system could accommodate. An anatomy-anchored reference system could also facilitate defining relative view planes, however, such as a sax view plane which is located at 50% of the distance between the RV apex and the TV centre, which is useful, for example, for observing contraction of the ventricle in the ventricle in the sax plane without the observed tissue moving out of the plane during the heartbeat.

For example, in some embodiments, multiple anatomy-anchored reference systems can be determined from the same set of identified predetermined features of interest. For example, one anatomy-anchored reference system could display a whole heart, while another comprises a coordinate system specifically for the mitral valve, and yet another comprises a coordinate system specifically for the tricuspid valve. In other words, different methods can be used to determine different anatomy-anchored reference systems from the same set of features of interest, for example, by applying different weights to the features.

In another example, only one anatomy-anchored reference system can be determined (e.g., including landmarks of the whole heart), but it can be used in different ways for different applications. For example, you could derive one `coordinate system' from the reference system which is centred in the Mital valve for Mitral valve specific applications and derive another coordinate system from the same reference system which is centred in the Tricuspid valve for Tricuspid valve specific applications.

In some embodiments, the medical dataset can comprise an ultrasound dataset. Ultrasound is commonly used to study/analyse/image anatomical structures.

In some embodiments, the method can further comprise actually obtaining the medical dataset comprising a representation of at least part of the anatomical structure.

In some embodiments, the anatomy-anchored reference system can comprise methods/instructions to derive predetermined views.

It should be noted that the anatomy-anchored reference system is not limited to any number or set of predefined views (of the anatomical structure) but can serve as a reference for an arbitrary number of user-defined view planes. This can facilitate, for example, the transferring of information from planning to live guidance for transcatheter mitral valve and tricuspid valve, e.g., valve repair and replacement. The present invention can also be used for observing patients after interventions for an extended time, allowing a clinician to be shown the same view planes over time.

The present invention is also very relevant for intra-procedural planning. For example, the operator can set an anatomical target plane (MPR) at the beginning of a procedure, for example, on a 3D TEE (transoesophageal echocardiography) volumetric dataset. The image quality of the 3D TEE is optimized for a certain position of the TEE transducer. At some point later in the procedure, however, when the TEE is repositioned to a different location and the 3D dataset images are therefore from a different perspective, it would be useful for the user to be able to recreate the same anatomical target planes in order to be able to more clearly compare. The present invention would therefore facilitate that. Another example would be a situation wherein an operator toggles between mid-oesophageal and transgastric positions of the TEE - this is particularly relevant for T-TEER (transcatheter edge-to-edge repair) procedures where the user would ideally like to compare datasets in the same orientation/perspective.

For instance, interventionalists cannot currently use information from intervention planning due to missing interfaces. This, however, can be solved by using an anatomy-anchored reference system, which can essentially act as a base for interfaces between applications which can easily be maintained, e.g., intervention planning results from TTE/CT can essentially be loaded into preprocedural reassessment TEE or into 3D Echo navigator live guidance applications, for example, via the anatomy-anchored reference system. Interventionalists are under time pressure and need a fast, reliable, and precise way to import planning information or to restore view information that was set during various phases of the procedure. This is exactly what the present invention provides.

Further, in case of long-term monitoring of a patient, for example, a sonographer needs to create the same views each time to be able to compare the progress of the disease. It is time consuming and error prone to find the same view manually, especially since in ultrasound, the acquisition direction is never usually exactly the same. The present invention can obviously be used to help in this case too.

Further, in case a user provides additional or more precise information, e.g., a correction of an annulus position, this information can be used to update, e.g., be stored in, the anatomy-anchored reference system and can thus improve future alignments/registrations.

In other words, the acquisition direction in relation to the anatomy is usually unknown in various forms of medical imaging/scanning, especially with ultrasound. Until now, segmentations and measurements have usually been stored in relation to the acquisition origin. However, with the present invention, segmentations and measurements can be stored in relation to the anatomy-anchored reference system, for example, can be stored in the medical dataset alongside the anatomy-anchored reference system. The anatomy-anchored reference system can then be used to store and load measurements and segmentations, even from different modalities, in a widely compatible way.

Referring now to Fig. 2, there is depicted a flow diagram of a method 200 for determining an anatomy-anchored reference system for a medical dataset comprising a representation of at least part of an anatomical structure according to a proposed embodiment.

Step 110 is substantially the same as has been described in relation to the method 100 in Fig. 1.

In step 215, a confidence score for each of the plurality of predetermined features of interest is determined. In step 220, the anatomy-anchored reference system is thus determined in substantially the same way as in step 120 of method 100 but further based on the confidence scores for each of the plurality of predetermined features of interest.

This facilitates the generation/determination of a more complex anatomy-anchored reference system which is capable of distinguishing between positions of features of interest which are more reliable (i.e., which the system is more confident on) and positions of features of interest which may be less reliable (i.e., which may have a higher degree of uncertainty). This can also facilitate the optimization of future alignment in a specific region of interest (ROI) by taking into account the confidence values of the different features of interest, and thus determining an anatomy-anchored reference system which, for example, is preferentially based on features of interest with high confidence scores in the ROI over features of interest with low confidence scores in that ROI and/or features of interest with high confidence scores but in other regions. For example, the confidence scores can comprise different labels, for example, 'feature was found inside data cone', `feature was adjusted by user'. `feature is only an estimate' (i.e., not found inside data cone), feature was extrapolated' (i.e., not found inside data cone). For example, these labels can be converted into numerical scores, such as, 1 to 4, for example. The use of confidence scores is not essential to the working of the invention, however, as the skilled person would understand.

For example, in this embodiment, determining a confidence score for each of the plurality of predetermined features of interest is based on whether a feature of interest has been adjusted/approved by a user (e.g., a physician). For example, confidence scores in user-adjusted/approved features of interest can be higher. Also, in this embodiment, determining a confidence score for each of the plurality of predetermined features of interest is further based on whether a feature of interest was found inside a data cone of the representation of at least part of the anatomical structure of the medical dataset.

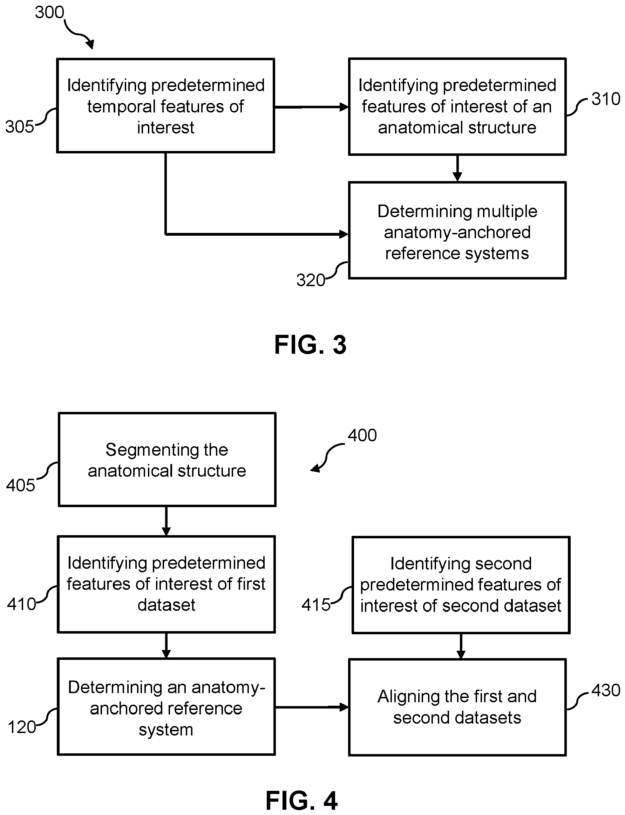

Confidence scores can also help facilitate better alignment between images/models, for example, if only some parts of the anatomical structure are visible in a transducer cone, and especially if the acquisition areas differ between the images. Confidence scores can also be applied to the temporal features of interest, as described later in relation to method 300 of Fig. 3.

In step 230, the medical dataset is adjusted based on the anatomy-anchored reference system. For instance, the medical dataset can be modified to take into account data contained within the anatomy-anchored reference system, e.g., benefitting from insights provided by the anatomy-anchored reference system. This provides an efficient way of utilising the both the anatomy-anchored reference system and the medical dataset in that useful data can be stored directly in the medical dataset. This is not essential to the working of the invention, however, as the skilled person would understand.

More specifically, in this embodiment, adjusting the medical dataset comprises storing the anatomy-anchored reference system in the medical dataset. This provides an efficient method of storage for the anatomy-anchored reference system as well as ensuring that the anatomy-anchored reference system will be available and immediately to hand in future when studying/analysing the medical dataset. Again, this is not essential to the working of the invention, as the skilled person would understand.

For instance, in some embodiments, alongside the anatomy-anchored reference system, other useful information can be stored in the medical dataset, for example, at least one of: a segmentation; a measurement; a landmark in relation to the anatomy-anchored reference system; and/or a view plane in relation to the anatomy-anchored reference system. For view planes, for example, they need not only include a geometric plane definition but should also define the in-plane rotation. This can thus provide an efficient and/or effective manner of storage of information which may be of use in the future.

Referring now to Fig. 3, there is depicted a flow diagram of a method 300 for determining an anatomy-anchored reference system for a medical dataset comprising a representation of at least part of an anatomical structure according to a proposed embodiment.

In this embodiment, the anatomical structure comprises a cyclically-moving anatomical structure. This facilitates the use of the proposed method with cyclically-moving anatomical structures which can particularly benefit from having an anatomy-anchored reference system determined for them. In fact, in this embodiment, the cyclically-moving anatomical structure comprises a heart. This facilitates the use of the proposed method with hearts, the mappings and registrations of which are of significant medical importance. In other embodiments, the cyclically-moving anatomical structure can comprise any other suitable cyclically-moving anatomical structure, as the skilled person would understand. For example, a cyclically-moving anatomical structure can be understood as a biological component within the body that undergoes repetitive, rhythmic motions or oscillations over a specific period, often associated with physiological processes such as the cardiac cycle, respiratory cycle, or peristalsis in the digestive system. For example, in other embodiments, the cyclically-moving anatomical structure can comprise: a lung; a small intestine; a large intestine; a uterus; a bladder; vocal chords; an eyelid; and/or a jaw.

In this embodiment, the medical dataset comprises at least two representations of at least part of the anatomical structure separated in time, i.e., at least two temporally-distinct representations, i.e., at least two representations at at least two respective distinct points in time. In some embodiments, the parts of the anatomical structure can be the same between the time points and in other embodiments, the parts can be different or partially different.

In some embodiments, the anatomy-anchored reference system could also be used to compare anatomical structures between different patients.

Step 305 comprises identifying a plurality of predetermined temporal features of interest of the anatomical structure in the medical dataset. For example, where the anatomical structure comprises a subject's heart, some example temporal features of interest could be: atrial contract; atrial relaxation; ventricular contraction; isovolumetric contraction; ventricular ejection; isovolumetric relaxation; early diastole; and/or late diastole. If the anatomical structure were another anatomical structure, however, (i.e., not a heart) the temporal features of interest would accordingly comprise a different set of possible options, as the skilled person would understand. For example, temporal features of interest can also be understood as timestamps relative to, for example, a heart cycle or intervals within the heart cycle (if the anatomical structure comprises a heart).

Step 310 is substantially the same as step 110 described in relation to method 100, however, in this embodiment, identifying the plurality of predetermined features of interest of the anatomical structure is further based on the predetermined temporal features of interest. This thus allows for more efficient and/or effective identification of the plurality of predetermined features of interest. For example, the anatomical structure (the heart) can be expected to look different at a certain point in time (temporal feature) compared to at another point in time.

The identified plurality of predetermined temporal features of interest can then be used, as it is in this embodiment, to aid in determining an anatomy-anchored reference system for the medical dataset. In other words, an anatomy-anchored reference system, such as the one determined in step 120 of method 100, can further based on the identified plurality of predetermined temporal features of interest. This allows for changes in the anatomical structure over time to be accounted for within the anatomy-anchored reference system.

In fact, in this embodiment, step 320 comprises determining a plurality of anatomy-based reference systems, wherein each of the plurality of anatomy-based reference systems is associated with a different predetermined temporal feature of interest. For example, this allows each temporal feature of interest (for example, the atrial contraction and atrial relaxation) to each have a corresponding anatomy-based reference system such that the reference systems can be more effective for anatomical structures during those same temporal features of interest.

For example, when a heart anatomy is compared for two different datasets, problems can occur when the two acquisitions stem from different views and/or from different frames in the heart cycle, since the heart deforms during the cycle. Identifying predetermined temporal features of interest, however, facilitates the common comparison of these different acquisitions, even if they come from heart cycles with different numbers of frames. For instance, this can be done by finding the corresponding time stamp with the help of the identified predetermined temporal features of interest.

For example, the identified predetermined temporal features of interest can comprise different intervals which are mapped to each other. For example, either a whole heart cycle can be mapped or a heart cycle can be divided into several intervals, e.g., [ED, ES), [ES, ED) → [ED, ES), [ES, ED), or any other suitable arbitrary mapping function, as the skilled person would understand depending on the anatomical structure and/or purpose.

For example, considering dynamic vs static temporal features of interest, it could be possible to store several timestamps (temporal features) in one anatomy-anchored reference system (static reference) or each time stamp can have its own anatomy-anchored reference system (dynamic reference). Further, the measurements/segmentations/view planes for each time stamp (temporal feature of interest) can be stored with (or in) the anatomy-anchored reference system of said one timestamp. The use of a dynamic reference would allow the same anatomical structure to be kept in a view plane during a cyclical movement (for instance, a heartbeat). This would facilitate, for example, the continued displaying of an apical-4-chamber view even in the case of apical rocking.

Referring now to Fig. 4, there is depicted a flow diagram of a method 400 for determining an anatomy-anchored reference system for a medical dataset comprising a representation of at least part of an anatomical structure according to a proposed embodiment.

Step 120 is substantially the same as has been described in relation to the method 100 in Fig. 1.

In step 405, the anatomical structure in the medical dataset is segmented to generate a segmentation mesh. In step 410, a plurality of predetermined features of interest of the anatomical structure is identified based on the segmentation. This provides a particularly efficient and/or effective method of identifying predetermined features of interest in an anatomical structure.

In step 415, a second plurality of predetermined features of interest of the anatomical structure are identified in a second medical dataset comprising a representation of at least a portion of the anatomical structure. The portion of the anatomical structure represented in the second medical dataset can be the same or different to or overlapping with the portion represented in the first medical dataset. Likewise, the second plurality of predetermined features can comprise the same features as in the first plurality of predetermined features, or only some of the same, or none of the same.

In step 430, the first and second medical datasets are then aligned based on the anatomy-anchored reference system and the second plurality of predetermined features of interest. This thus facilitates the efficient and/or effective aligning/registration of two different representations of the same anatomical structure based on the anatomy-anchored reference system.

For example, in embodiments using confidence scores, such as in method 300 of Fig. 3, the alignment of step 430 can be further based on the confidence scores such that alignment in a region of interest can be prioritised/optimized.

In other embodiments, the method 400 can comprise a further step between steps 415 and 430 comprising determining a second anatomy-anchored reference system for the second medical dataset based on the identified second plurality of predetermined features of interest. Step 430 would thus comprise aligning the first and second medical datasets based on the first and second anatomy-anchored reference systems. This can provide a more robust and comprehensive, but more computationally expensive, method of aligning the first and second medical datasets.

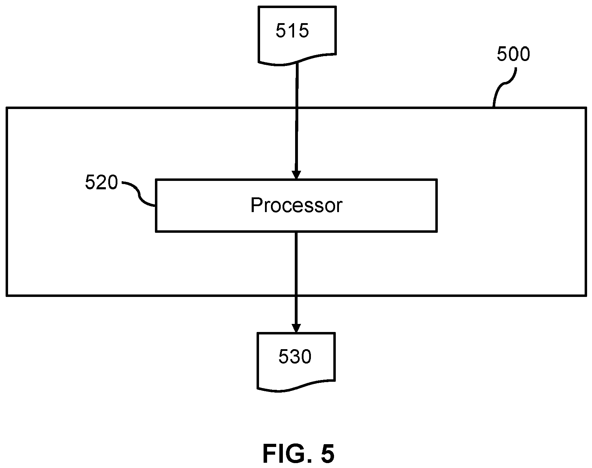

Referring now to Fig. 5, there is depicted a system 500 for determining an anatomy-anchored reference system for a medical dataset comprising a representation of at least part of an anatomical structure according to a proposed embodiment. The system 500 comprises a processor 520.

The system 500 is configured to determine an anatomy-anchored reference system by processing inputs 515. The inputs 515 comprise the medical dataset comprising a representation of at least part of an anatomical structure. The processor 520 is then configured to identify a plurality of predetermined features of interest of the anatomical structure in the medical dataset and then determine an output 530 based on the identified plurality of predetermined features of interest. The output 530 comprises an anatomy-anchored reference system for the medical dataset.

In some embodiments, the system 500 can further include an input interface (not shown), for example, which is configured to obtain a medical dataset comprising a representation of at least part of an anatomical structure.

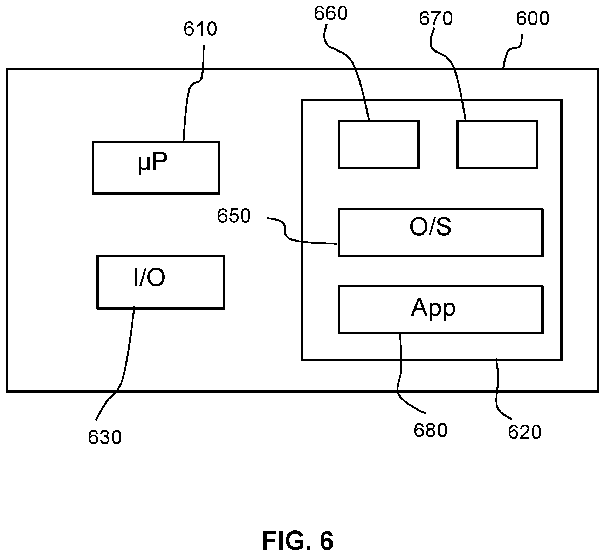

Fig. 6 illustrates an example of a computer 600 within which one or more parts of an embodiment may be employed. Various operations discussed above may utilize the capabilities of the computer 600. In this regard, it is to be understood that system functional blocks can run on a single computer or may be distributed over several computers and locations (e.g. connected via internet).

The computer 600 includes, but is not limited to, PCs, workstations, laptops, PDAs, palm devices, servers, storages, and the like. Generally, in terms of hardware architecture, the computer 600 may include one or more processors 610, memory 620 and one or more I/O devices 630 that are communicatively coupled via a local interface (not shown). The local interface can be, for example but not limited to, one or more buses or other wired or wireless connections, as is known in the art. The local interface may have additional elements, such as controllers, buffers (caches), drivers, repeaters, and receivers, to enable communications. Further, the local interface may include address, control, and/or data connections to enable appropriate communications among the aforementioned components.

The processor 610 is a hardware device for executing software that can be stored in the memory 620. The processor 610 can be virtually any custom made or commercially available processor, a central processing unit (CPU), a digital signal processor (DSP), or an auxiliary processor among several processors associated with the computer 600, and the processor 610 may be a semiconductor based microprocessor (in the form of a microchip) or a microprocessor.

The memory 620 can include any one or combination of volatile memory elements (e.g., random access memory (RAM), such as dynamic random access memory (DRAM), static random access memory (SRAM), etc.) and non-volatile memory elements (e.g., ROM, erasable programmable read only memory (EPROM), electronically erasable programmable read only memory (EEPROM), programmable read only memory (PROM), tape, compact disc read only memory (CD-ROM), disk, diskette, cartridge, cassette or the like, etc.). Moreover, the memory 620 may incorporate electronic, magnetic, optical, and/or other types of storage media. Note that the memory 620 can have a distributed architecture, where various components are situated remote from one another, but can be accessed by the processor 610.

The software in the memory 620 may include one or more separate programs, each of which comprises an ordered listing of executable instructions for implementing logical functions. The software in the memory 620 includes a suitable operating system (O/S) 650, compiler 660, source code 670, and one or more applications 680 in accordance with exemplary embodiments. As illustrated, the application 680 comprises numerous functional components for implementing the features and operations of the exemplary embodiments. The application 680 of the computer 600 may represent various applications, computational units, logic, functional units, processes, operations, virtual entities, and/or modules in accordance with exemplary embodiments, but the application 680 is not meant to be a limitation.

The operating system 650 controls the execution of other computer programs, and provides scheduling, input-output control, file and data management, memory management, and communication control and related services. It is contemplated by the inventors that the application 680 for implementing exemplary embodiments may be applicable on all commercially available operating systems.

Application 680 may be a source program, executable program (object code), script, or any other entity comprising a set of instructions to be performed. When a source program, then the program is usually translated via a compiler (such as the compiler 660), assembler, interpreter, or the like, which may or may not be included within the memory 620, so as to operate properly in connection with the O/S 650. Furthermore, the application 680 can be written as an object oriented programming language, which has classes of data and methods, or a procedure programming language, which has routines, subroutines, and/or functions, for example but not limited to, C, C++, C#, Pascal, Python, BASIC, API calls, HTML, XHTML, XML, ASP scripts, JavaScript, FORTRAN, COBOL, Perl, Java, ADA, .NET, and the like.

The I/O devices 630 may include input devices such as, for example but not limited to, a mouse, keyboard, scanner, microphone, camera, etc. Furthermore, the I/O devices 630 may also include output devices, for example but not limited to a printer, display, etc. Finally, the I/O devices 630 may further include devices that communicate both inputs and outputs, for instance but not limited to, a NIC or modulator/demodulator (for accessing remote devices, other files, devices, systems, or a network), a radio frequency (RF) or other transceiver, a telephonic interface, a bridge, a router, etc. The I/O devices 630 also include components for communicating over various networks, such as the Internet or intranet.

If the computer 600 is a PC, workstation, intelligent device or the like, the software in the memory 620 may further include a basic input output system (BIOS) (omitted for simplicity). The BIOS is a set of essential software routines that initialize and test hardware at start-up, start the O/S 650, and support the transfer of data among the hardware devices. The BIOS is stored in some type of read-only-memory, such as ROM, PROM, EPROM, EEPROM or the like, so that the BIOS can be executed when the computer 600 is activated.

When the computer 600 is in operation, the processor 610 is configured to execute software stored within the memory 620, to communicate data to and from the memory 620, and to generally control operations of the computer 600 pursuant to the software. The application 680 and the O/S 650 are read, in whole or in part, by the processor 610, perhaps buffered within the processor 610, and then executed.

When the application 680 is implemented in software it should be noted that the application 680 can be stored on virtually any computer readable medium for use by or in connection with any computer related system or method. In the context of this document, a computer readable medium may be an electronic, magnetic, optical, or other physical device or means that can contain or store a computer program for use by or in connection with a computer related system or method.

The application 680 can be embodied in any computer-readable medium for use by or in connection with an instruction execution system, apparatus, or device, such as a computer-based system, processor-containing system, or other system that can fetch the instructions from the instruction execution system, apparatus, or device and execute the instructions. In the context of this document, a "computer-readable medium" can be any means that can store, communicate, propagate, or transport the program for use by or in connection with the instruction execution system, apparatus, or device. The computer readable medium can be, for example but not limited to, an electronic, magnetic, optical, electromagnetic, infrared, or semiconductor system, apparatus, device, or propagation medium.

The methods of Figs. 1-4, and the system of Fig. 5, may be implemented in hardware or software, or a mixture of both (for example, as firmware running on a hardware device). To the extent that an embodiment is implemented partly or wholly in software, the functional steps illustrated in the process flowcharts may be performed by suitably programmed physical computing devices, such as one or more central processing units (CPUs) or graphics processing units (GPUs). Each process - and its individual component steps as illustrated in the flowcharts - may be performed by the same or different computing devices. According to embodiments, a computer-readable storage medium stores a computer program comprising computer program code configured to cause one or more physical computing devices to carry out an encoding or decoding method as described above when the program is run on the one or more physical computing devices.

Storage media may include volatile and non-volatile computer memory such as RAM, PROM, EPROM, and EEPROM, optical discs (like CD, DVD, BD), magnetic storage media (like hard discs and tapes). Various storage media may be fixed within a computing device or may be transportable, such that the one or more programs stored thereon can be loaded into a processor.

To the extent that an embodiment is implemented partly or wholly in hardware, the blocks shown in the block diagrams of Fig. 6 may be separate physical components, or logical subdivisions of single physical components, or may be all implemented in an integrated manner in one physical component. The functions of one block shown in the drawings may be divided between multiple components in an implementation, or the functions of multiple blocks shown in the drawings may be combined in single components in an implementation. Hardware components suitable for use in embodiments of the present invention include, but are not limited to, conventional microprocessors, application specific integrated circuits (ASICs), and field-programmable gate arrays (FPGAs). One or more blocks may be implemented as a combination of dedicated hardware to perform some functions and one or more programmed microprocessors and associated circuitry to perform other functions.

A single processor or other unit may fulfil the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". Any reference signs in the claims should not be construed as limiting the scope.

The flowchart and block diagrams in the Figures illustrate the architecture, functionality, and operation of possible implementations of systems, methods, and computer program products according to various embodiments of the present invention. In this regard, each block in the flowchart or block diagrams may represent a module, segment, or portion of instructions, which comprises one or more executable instructions for implementing the specified logical function(s). In some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions, the architecture, functionality, and operation of possible implementations of systems, methods, and computer program products according to various embodiments of the present invention.

## Claims

1. A computer-implemented method (100) for determining an anatomy-anchored reference system for a medical dataset comprising a representation of at least part of an anatomical structure, the method comprising:
identifying a plurality of predetermined features of interest (110) of the anatomical structure in the medical dataset; and
determining an anatomy-anchored reference system (120) for the medical dataset based on the identified plurality of predetermined features of interest.

2. The computer-implemented method of claim 1, wherein the method further comprises:
adjusting the medical dataset (230) based on the anatomy-anchored reference system, and preferably wherein adjusting the medical dataset comprises storing the anatomy-anchored reference system in the medical dataset.

3. The computer-implemented method of claim 1 or 2, wherein the medical dataset comprises at least one medical image of at least part of the anatomical structure.

4. The computer-implemented method of any of claims 1 to 3, wherein identifying the plurality of predetermined features of interest of the anatomical structure is based on a predetermined anatomical model.

5. The computer-implemented method of any of claims 1 to 4, wherein the plurality of features comprises at least one of: a landmark; a polygon; a mesh; a point cloud; and/or a parametric model.

6. The computer-implemented method of any of claims 1 to 5, wherein identifying the plurality of predetermined features of interest of the anatomical structure comprises determining a confidence score for each of the plurality of predetermined features of interest (215).

7. The computer-implemented method of any of claims 1 to 6, wherein the anatomical structure comprises a cyclically-moving anatomical structure, and preferably wherein the cyclically-moving anatomical structure comprises a heart.

8. The computer-implemented method of any of claims 1 to 7, wherein the method further comprises:
segmenting the anatomical structure (405) in the medical dataset to generate a segmentation mesh; and
wherein identifying the plurality of predetermined features of interest (410) of the anatomical structure is based on the segmentation mesh.

9. The computer-implemented method of any of claims 1 to 8, wherein the method further comprises:
identifying a second plurality of predetermined features of interest (415) of the anatomical structure in a second medical dataset comprising a representation of at least a portion of the anatomical structure; and
aligning the first and second medical datasets (430) based on the anatomy-anchored reference system and the second plurality of predetermined features of interest.

10. The computer-implemented method of any of claims 1 to 9, wherein the medical dataset comprises at least two representations of at least part of the anatomical structure separated in time, and the method further comprises:
identifying a plurality of predetermined temporal features of interest (305) of the anatomical structure in the medical dataset; and
wherein determining the anatomy-anchored reference system is based on the predetermined temporal features of interest of the anatomical structure in the medical dataset.

11. The computer-implemented method of claim 10, wherein identifying the plurality of predetermined features of interest (310) of the anatomical structure is based on the predetermined temporal features of interest.

12. The computer-implemented method of claim 10 or 11, wherein determining the anatomy-based reference system comprises determining a plurality of anatomy-based reference systems (320), and wherein each of the plurality of anatomy-based reference systems is associated with a different predetermined temporal feature of interest.

13. The computer-implemented method of any of claims 1 to 12, wherein the anatomy-anchored reference system comprises an anatomy-anchored coordinate system.

14. A computer program comprising code means for implementing the method of any preceding claim when said program is run on a processing system.

15. A system (500) for determining an anatomy-anchored reference system for a medical dataset comprising a representation of at least part of an anatomical structure, the system comprising:
a processor (520) configured to:
identify a plurality of predetermined features of interest of the anatomical structure in the medical dataset; and
determine an anatomy-anchored reference system for the medical dataset based on the identified plurality of predetermined features of interest.
